# EUROPÄISCHE PATENTANMELDUNG

(11) **EP 2 444 525 A2**
(43) Veröffentlichungstag der Anmeldung: **25.04.2012**
(21) Anmeldenummer: 11185495.6
(22) Anmeldetag: 17.10.2011
(51) Int. Cl.: C25B 11/03, H01M 4/88

(54) **Sauerstoffverzehrelektrode**

(30) Priorität: 21.10.2010 DE 102010042730
(71) Anmelder: Bayer MaterialScience AG, 51368 Leverkusen (DE)
(72) Erfinder: Bulan, Andreas, 40764 Langenfeld (DE); Kintrup, Jürgen, 51373 Leverkusen (DE); Morhenn, Heinrich, 50829 Köln (DE)

(57) **Zusammenfassung**

Es wird eine Sauerstoffverzehrelektrode beschrieben deren Träger auf einem entfernbaren Werkstoff basiert. Es wird ferner die Verwendung dieser Sauerstoffverzehrelektrode in der Chloralkali-Elektrolyse oder Brennstoffzellentechnik beschrieben.

## Beschreibung

Die Erfindung betrifft eine Sauerstoffverzehrelektrode, aufweisend einen Träger in Form eines Flächengebildes, dadurch gestaltet, dass das Flächengebilde auf einem auflösbaren Werkstoff basiert. Die Erfindung betrifft ferner ein Herstellungsverfahren für Sauerstoffverzehrelektroden, sowie die Verwendung dieser Sauerstoffverzehrelektrode in der Chloralkali-Elektrolyse oder Brennstoffzellentechnik.

Die Erfindung geht aus von an sich bekannten Sauerstoffverzehrelektroden, die als Gasdiffusionselektroden ausgebildet sind und üblicherweise einen elektrisch leitenden Träger und eine Gasdiffusionsschicht mit einer katalytisch aktiven Komponente umfassen.

Verschiedene Vorschläge zum Betrieb der Sauerstoffverzehrelektroden in Elektrolysezellen in technischer Größe sind aus dem Stand der Technik grundsätzlich bekannt. Die Grundidee dabei ist, die Wasserstoff entwickelnde Kathode der Elektrolyse (beispielsweise in der Chloralkali-Elektrolyse) durch die Sauerstoffverzehrelektrode (Kathode) zu ersetzen. Eine Übersicht über die möglichen Zelldesigns und Lösungen kann der Veröffentlichung von Moussallem et al "Chlor-Alkali Electrolysis with Oxygen Depolarized Cathodes: History, Present Status and Future Prospects", J. Appl. Electrochem. 38 (2008) 1177-1194, entnommen werden.

Die Sauerstoffverzehrelektrode ― im folgenden auch kurz SVE genannt - muss eine Reihe von Anforderungen erfüllen, um in technischen Elektrolyseuren einsetzbar zu sein. So muss der Katalysator und alle anderen verwendeten Materialien chemisch stabil sein gegen Natronlauge von ca. 32 Gew.% und gegenüber reinem Sauerstoff bei einer Temperatur von typischerweise 80 - 90°C. Ebenso wird ein hohes Maß an mechanischer Stabilität gefordert, dass die Elektroden in Elektrolyseuren einer Größe von üblicherweise mehr als 2 m² Fläche (technische Größe) eingebaut und betrieben werden. Weitere Eigenschaften sind: eine hohe elektrische Leitfähigkeit, eine geringe Schichtdicke, eine hohe innere Oberfläche und eine hohe elektrochemische Aktivität des Elektrokatalysators. Geeignete hydrophobe und hydrophile Poren und eine entsprechende Porenstruktur zur Leitung von Gas und Elektrolyt sind ebenso notwendig, wie eine Dichtigkeit, so dass Gas und Flüssigkeitsraum voneinander getrennt bleiben. Die Langzeitstabilität und geringe Herstellkosten sind weitere besondere Anforderungen an eine technisch nutzbare Sauerstoffverzehrelektrode.

Eine weitere Entwicklungsrichtung zur Nutzung der SVE-Technologie in der Chlor-AlkaliElektrolyse ist die Ionenaustauschermembran, die in der Elektrolysezelle den Anoden- vom Kathodenraum trennt, ohne Natronlaugespalt direkt auf die SVE aufzulegen. Diese Anordnung wird auch als zero gap Anordnung im Stand der Technik bezeichnet. Diese Anordnung wird üblicherweise auch in der Brennstoffzellen-Technologie angewandt. Nachteilig hierbei ist, dass die sich bildenden Natronlauge durch die SVE zur Gasseite geleitet werden muss und anschließend an der SVE nach unten fließt. Hierbei darf es nicht zu einer Verstopfung der Poren in der SVE durch die Natronlauge oder zu Auskristallisation von Natronlauge in den Poren kommen. Es hat sich herausgestellt, dass hierbei auch sehr hohe Natronlauge-Konzentrationen entstehen können, wobei die Ionenaustauschermembran gegen diese hohen Konzentrationen nicht langzeitstabil ist (Lipp et al, J. Appl. Electrochem. 35 (2005)1015 - Los Alamos National Laboratory "Peroxide formation during chlor-alkali electrolysis with carbon-based ODC").

Eine herkömmliche Sauerstoffverzehrelektrode besteht typischerweise aus einem elektrisch leitenden Trägerelement, auf das die Gasdiffusionsschicht mit einer katalytisch aktiven Komponente aufgebracht ist. Als hydrophobe Komponente wird beispielsweise Polytetrafluorethylen (PTFE) eingesetzt, welches zudem als polymerer Binder des Katalysators dient. Bei Elektroden mit Edelmetall-Katalysator dient das Edelmetall als hydrophile Komponente.

Als Katalysator dient in der Regel ein Metall, eine Metallverbindung, eine nichtmetallische Verbindung oder eine Mischung von Metallverbindungen oder nichtmetallischen Verbindungen. Bekannt sind aber auch auf einen Kohlenstoffträger aufgebrachte Metalle, insbesondere Metalle der Platingruppe.

Bei den Trägerelementen nach dem Stand der Technik handelt es sich in der Regel um Gewebe aus leitfähigem Material, zum Bespiel ein Gewebe aus Nickeldrähten, Silberdrähten oder mit Silber überzogenen Nickeldrähten.

Kohlenstoff wird nach dem Stand der Technik ebenfalls in verschiedenen Formen für Trägerelemente eingesetzt, so zum Beispiel Gewebe oder Papiere aus Kohlenstofffasern. Zur Erhöhung der Leitfähigkeit kann der Kohlenstoff mit Metallkomponenten kombiniert werden, zum Beispiel durch Abscheidung von Metall auf dem Kohlenstoff oder durch Mischgewebe aus Kohlenstofffasern und metallischen Fasern und Filamenten.

Entsprechend dem Stand der Technik haben die Trägerelemente zwei wesentliche Funktionen: Sie dienen zum einen als mechanischer Träger für die den Katalysator enthaltende Schicht während und nach der Fertigung der Elektroden, und sorgen zum anderen für die Stromverteilung zu den Reaktionszentren.

Ein Nachteil der nach dem Stand der Technik bekannten Trägerelemente ist, dass sie katalytisch weitgehend inaktiv sind und die raumspezifische Aktivität der Sauerstoffverzehrelektrode vermindern. Darüber hinaus vermindern die Trägerelemente die für den Stofftransport durch die Sauerstoffverzehrelektrode zur Verfügung stehende freie Fläche. Dies behindert den Stofftransport und somit vermindert die Leistung der Sauerstoffverzehrelektrode.

Die Aufgabe der vorliegenden Erfindung besteht darin, eine Sauerstoffverzehrelektrode bereitzustellen, insbesondere für den Einsatz in der Chloralkali-Elektrolyse, die die vorstehenden Nachteile überwindet.

Spezielle Aufgabe der Erfindung ist es eine Sauerstoffverzehrelektrode bereitzustellen, die die Nachteile durch die bekannten Trägerelemente vermeidet und insbesondere eine Behinderung des Stofftransportes durch das Trägerelement vermeidet.

Die Aufgabe wird gelöst durch eine Sauerstoffverzehrelektrode basierend auf Trägerelementen aus einem durch Lösen, Zersetzen, Schmelzen und/oder Verdampfen wenigstens teilweise entfernbaren Werkstoff, und der Inbetriebnahme dieser Sauerstoffverzehrelektrode durch Herauslösen oder Zersetzen des Trägerelements.

Gegenstand der Erfindung ist eine Sauerstoffverzehrelektrode, mindestens aufweisend einen Träger in Form eines Flächengebildes und eine Beschichtung mit einer Gasdiffusionsschicht und einer katalytisch aktiven Komponente, dadurch gekennzeichnet, dass der Träger auf einem durch Lösen, Zersetzen, Schmelzen und/oder Verdampfen mindestens teilweise entfernbaren Werkstoff basiert.

Die Grundidee der Erfindung besteht darin den für das Aufbringen der katalytischen Komponente und Erzeugung der Gasdiffusionsschicht zunächst benötigten Träger mindestens teilweise aus der gefertigten Elektrode wieder zu entfernen um die dabei entstehenden Hohlräume für einen erleichterten Stofftransport z. B. von Elektrolyt zu den katalytisch aktiven Komponenten zu nutzen.

Die Erfindung nutzt dabei die selbsttragende Eigenschaft der Gasdiffusionsschicht als Ersatz für die mechanischen Eigenschaften des Trägers.

Die erfindungsgemäß hergestellten Sauerstoffverzehrelektroden sind mechanisch hinreichend stabil und zeigen überraschenderweise eine bessere Leistung als herkömmliche Sauerstoffelektroden.

Als Werkstoffe für die Träger eignen sich grundsätzlich ausgewählte Polymere, Mineralfasern und Metalle. In einer bevorzugten Ausführung der Erfindung ist der Trägerwerkstoff mittels Wasser oder wässriger Lösungen, insbesondere saurer oder basischer Lösungen aus der Elektrode lösbar oder zersetzbar. Beispiele für bevorzugte in Wasser lösliche Werkstoffe sind Polyvinylalkohol und Polyvinylpyrrolidon.

Die Entfernung des Trägers kann durch Lösen, Schmelzen, Verdampfen oder Zersetzen erfolgen. Geeignete Medien für das Zersetzen/ Lösen sind Wasser, Laugen, Säuren, organische Lösungsmittel. Die Zersetzung kann durch zusätzliches Erhitzen oder Bestrahlen unterstützt werden, oder durch Erhitzen und/oder Bestrahlen erfolgen.

Für das Herauslösen im alkalischen können jeweils Reagenzien genommen werden, in welchen sich die die entsprechenden Werkstoffe des Trägers lösen.

Eine bevorzugte Variante der neuen Sauerstoffverzehrelektrode ist dadurch gekennzeichnet, dass der Trägerwerkstoff mittels basischer wässriger Lösungen eines pH Wertes von mindestens 9, bevorzugt mittels Einwirkung von Alkalilaugen aus der Reihe: Natronlauge, Kalilauge, bevorzugt Natronlauge aus der Elektrode lösbar oder zersetzbar ist.

Insbesondere lassen sich Alkali-unbeständige Metalle wie Aluminium, Zinn, Zink, Beryllium verwenden.

Bevorzugt sind daher auch basisch angreifbare Trägerwerkstoffe insbesondere solche ausgewählt ist aus der Reihe: Polyester, insbesondere Polyethylenterephthalat, Polybutylenterephthalat und deren Copolymere, Polyvinylidenfluorid; Aluminium; Mineralfasern, insbesondere Fasern aus E-Glas, R-Glas, S-Glas, A-Glas, C-Glas, D-Glas.

Für das Herauslösen im sauren können jeweils Reagenzien genommen werden, in welchen sich die die entsprechenden Werkstoffe des Trägers lösen. Es können sowohl anorganische als auch organische Säuren eingesetzt werden. Bevorzugt sind Säuren, bei welchen keine Kontamination mit den Katalysator beeinträchtigenden Anionen zu befürchten ist. Eine bevorzugte Säure ist daher Schwefelsäure.

Bevorzugt ist der Trägerwerkstoff mittels saurer wässriger Lösungen eines pH Wertes von höchstens 5, insbesondere bevorzugt mittels Einwirkung von Mineralsäuren, besonders bevorzugt mittels Schwefelsäure aus der Elektrode lösbar oder zersetzbar.

Insbesondere lassen sich Säure-unbeständige Metalle wie Aluminium, Zink oder Eisen verwenden.

Besonders bevorzugt ist eine Ausführung der neuen Sauerstoffverzehrelektrode bei der der Trägerwerkstoff auf einem Werkstoff aus der Reihe: Aluminium oder Zink oder deren Legierungen oder Polyamiden basiert.

Für das Herauslösen mittels Lösungsmittel können jeweils Reagenzien genommen werden, in welchen sich die die entsprechenden Werkstoffe des Trägers lösen. Die können zum Beispiel Toluol oder Methylenchlorid für das Herauslösen einer Polystyrol- oder Polycarbonat-Matrix eingesetzt werden oder Ethylencarbonat für das Herauslösen von Polyacrylnitril-Matrix. Dem Fachmann sind für die entsprechenden Werkstoffe geeignete Lösungsmittel grundsätzlich bekannt.

Eine weitere bevorzugte Variante der neuen Sauerstoffverzehrelektrode ist dadurch gekennzeichnet, dass der Trägerwerkstoff ein Werkstoff ist, der mittels organischer Lösungsmittel aus der Elektrode lösbar oder zersetzbar ist.

Bevorzugt sind daher auch mittels organischer Lösungsmittel angreifbare Trägerwerkstoffe insbesondere Trägerwerkstoffe ausgewählt ist aus der Reihe: Polyacrylnitril, Polycarbonat und Polystyrol. Geeignete Polymere sind zum Beispiel wasserlösliche Polymere wie Polyvinylalkohol oder Polyvinylpyrrolidon —und weiterhin Polyacrylnitril, Polyamid 6, Polyamid 6,6, Polyamid 11, Polyamid 12, Polycarbonat, Polystyrol und Copolymere wie ABS, SAN, ASA, Polyphenylenoxid, Polyurethan, Polyester, insbesondere Polyethylenterephthalat, Polybutylenterephthalat, Polyvinylacetat, Etyhlen-Vinylacetat, Polyvinylidenchlorid, Polymethyl (meth) acrylat, Polybutylene, Celluloseacetat, Polylactide und Copolymere und Blends der genannten Polymere.

Geeignete Mineralfasern sind Glasfasern, bevorzugt solche aus E-Glas, R-Glas, S-Glas, A-Glas, C-Glas, D-Glas.

Es können aber auch alternativ auf Cellulose basierende natürliche Materialien wie Baumwolle oder Sisal oder auch Wolle als Trägermaterial eingesetzt werden.

Ebenso können auch Kombinationen des vorgenannten Werkstoffe eingesetzt werden.

Ebenfall eigenen sich Metalllegierungen, welche einen niedrigen Schmelzpunkt aufweisen wie zum Beispiel Wismut/Zinn oder andere Legierungen von Wismut mit Zinn, Blei, Cadmium und/oder weiteren Komponenten.

Es können auch Kombinationen der vorgenannten Werkstoffe eingesetzt werden.

Bevorzugt werden Werkstoffe, welche sich in Wasser und/oder alkalischen wässrigen Lösungen zersetzen und/oder auflösen. Besonders bevorzugt werden Werkstoffe, welche sich in alkalischen wässrigen Lösungen zersetzen und/oder auflösen.

Die Träger können in Form von Geweben, Gewirken, Vliesen, perforierten Folien, Schäumen oder anderen, durchlässigen flächigen Strukturen eingesetzt werden. Es können auch mehrlagige Strukturen, eingesetzt werden, zum Beispiel zwei oder mehrere Lagen von Geweben, Gewirken, Vliesen, perforierte Folien, Schäumen oder anderen, durchlässigen flächigen Gebilden. Die Lagen können unterschiedlich stark sein und unterschiedliche Maschenweiten oder Perforationen haben. Die Träger oder ihre Vorstufen können zwecks besserer Verarbeitbarkeit mit Schlichten oder sonstigen Additiven behandelt werden.

Das Flächengebilde des Trägers liegt in einer bevorzugten Ausführung der Erfindung in Form eines Gewebes, Gewirks, Vlieses, perforierter Folie, Schaum vor, bevorzugt als Gewebe, und ist insbesondere in mehreren Lagen aufgebaut.

Eine bevorzugte Form der neuen Sauerstoffverzehrelektrode ist dadurch gekennzeichnet, dass die Gasdiffusionsschicht auf einem fluorierten Polymer, insbesondere auf Polytetrafluorethylen und gegebenenfalls zusätzlich katalytisch aktivem Material basiert.

In einer ebenfalls bevorzugten Ausführung ist die katalytisch aktiven Komponente ausgewählt aus der Reihe: Silber, Silber I-Oxid, Silber-II-Oxid oder deren Gemische, insbesondere einem Gemisch aus Silber und Silber I-Oxid.

Die Beschichtung der Träger kann mit den an sich bekannten herkömmlichen Techniken durchgeführt werden.

Für die Elektrolyse von Alkalichloriden mit Sauerstoffverzehrkathoden haben sich Silberkatalysatoren als besonders geeignet erwiesen.

Bei der Herstellung von SVE mit Silber-Katalysator kann das Silber zumindest teilweise in Form von Silber (I) oder Silber (II) Oxiden eingebracht werden, welche dann zu metallischem Silber reduziert werden. Die Reduktion erfolgt entweder in der Anfangsphase der Elektrolyse, in welcher bereits Bedingungen für eine Reduktion von Silberverbindungen bestehen, oder in einem gesonderten Schritt vor Inbetriebnahme der Elektrode durch elektrochemische, chemische oder andere, dem Fachmann bekannte Weise. Bei der Reduktion der Silberverbindungen kommt es auch zu einer Änderung in der Anordnung der Kristallite, insbesondere auch zu einer Brückenbildung zwischen einzelnen Silberpartikeln. Dies führt insgesamt zu einer Verfestigung der Struktur.

Bei der Herstellung von Sauerstoffverzehrelektroden lässt sich prinzipiell zwischen trockenen und nassen Fertigungsverfahren unterscheiden.

Bei den trockenen Verfahren wird ein Gemisch aus Katalysator und polymerer Komponente zu feinen Partikeln vermahlen, welche anschließend auf das Trägerelement verteilt und bei Raumtemperatur verpresst werden. Ein solches Verfahren ist in EP 1728896 A2 beschrieben.

Als bevorzugte Katalysatoren werden in der Erfindung Silber, Silber I-Oxid, Silber-II-Oxid oder deren Gemische, und als bevorzugter Träger ein Netz aus Polymer- oder Metalldrähten mit einem Drahtdurchmesser von 0,1 ― 0,3 mm und einer Maschenbreite von 0,2 ― 1,2 mm eingesetzt.

Bei den nassen Fertigungsverfahren wird entweder eine Paste oder eine Suspension bestehend aus Katalysator und polymerer Komponente verwendet. Bei der Herstellung der Pasten oder Suspension können oberflächenaktive Substanzen zugegeben werden, um deren Stabilität zu erhöhen. Die Pasten werden wird mittels Siebdruck oder Kalandrieren auf das Trägerelement aufgebracht, während die weniger viskosen Suspensionen üblicherweise auf das Trägerelement aufgesprüht werden. Die Paste bzw. Suspension wird nach Ausspülen des Emulgators schonend getrocknet und dann bei Temperaturen im Bereich des Schmelzpunktes des Polymers gesintert. Ein solches Verfahren wird zum Beispiel in US20060175195 A1 beschrieben.

In älteren Veröffentlichungen finden sich auch Verfahren, bei welchen das Gemisch aus Katalysator und Polymer in einem ersten Schritt zu einem flächigen Gebilde ("Fell") verdichtet wird und dieses Gebilde dann in das Trägerelement gepresst wird. Beispiele für solche Verfahren sind in DE10148599 A1 oder EP0115845B1 beschrieben. Da diese flächigen Gebilde eine geringe mechanische Stabilität aufweisen, haben sich diese Verfahren als wenig praxistauglich erwiesen. Es werden daher diejenigen Verfahren bevorzugt, bei welchen erst die Beschichtung des Trägerelement mit dem Gemisch aus Katalysator und Polymer erfolgt und in weiteren Schritten die Verdichtung und Verfestigung erfolgen.

So lassen sich in dem erwähnten Trockenverfahren Träger aus den genannten löslichen oder zersetzbaren Werkstoffen einsetzen. Als Werkstoff für den Träger sei hier beispielhaft, aber ohne die Erfindung hierauf zu beschränken, ein Gewebe aus PET-Monofilen genannt. Die Gewebe aus PET-Monofilen sind hinreichend dimensionsstabil und lassen sich mit den beschriebenen Techniken beschichten. Die Verfestigung der katalytisch wirksamen Masse erfolgt ohne Wärmezufuhr, so dass die Struktur und Festigkeit des Trägerelements in diesem Fertigungsschritt erhalten bleiben. Man erhält auf diese Weise eine neue Elektrode, aus welcher in einem weiteren Schritt der Träger entfernt wird.

Die Entfernung kann nach der Verfestigung in einem separaten Schritt durch Einwirkung von konzentrierter Natronlauge auf die Elektrode erfolgen. Nach Zersetzen des PET wird dann mit weiterer Lauge und gegebenenfalls Wasser gespült, um Reste vor Terephthalat und Ethylenglykolen zu entfernen. Man erhält so eine Sauerstoffverzehrelektrode, welche in ein Element eingebaut und zum Beispiel für die Herstellung von Natronlauge eingesetzt werden kann.

Die neue Elektrode kann aber auch in einer bevorzugten Variante nach Verdichten der katalytisch aktiven Schicht in ein Elektrolyseelement eingebaut werden welches für die Elektrolyse von Alkalichlorid-Lösungen eingesetzt wird. Die Kathode produziert in der Anfangsphase eine kontaminierte Lauge, welche separat gehalten und einer Anwendung zugeführt wird, bei welcher jedoch die Kontamination durch Terephthalat und Ethylenglykole nicht stört. Nach dieser Anfangsphase erhält man eine leistungsfähige SVE, mit welcher spezifikationsgerechtes Alkalihydroxid hergestellt werden kann.

Alternativ kann in dem vorgenannten Trockenverfahren ein Gewebe aus Polycarbonat-Monofilen eingesetzt werden. Die Monofile werden dann nach Verdichten der katalytisch aktiven Schicht mit Methylenchlorid oder einem anderen Lösungsmittel herausgelöst, nach Spülen mit Methylenchlorid und Verdunsten von Lösungsmittelresten erhält man eine funktionsfähige Sauerstoffverzehrelektrode.

In gleicher Weise lassen sich in dem erwähnten Nassverfahren Träger aus den genannten löslichen oder zersetzbaren Werkstoffen einsetzen. Bevorzugt werden hier Werkstoffe, deren Schmelzpunkt oberhalb des Sintertemperatur liegt. Als Werkstoff für den Träger sei hier beispielhaft, aber ohne die Erfindung hierauf zu beschränken, ein Gewebe aus Aluminiumdraht genannt. Die Gewebe aus Aluminium-Draht lassen sich analog den herkömmlichen Geweben aus Nickel- oder Silberdraht mit den beschriebenen Techniken beschichten. Die katalytisch aktive Schicht wird dann mit den bekannten Techniken verdichtet und gesintert. Man erhält auf diese Weise eine neue Elektrode, aus welcher in einem weiteren Schritt der Träger entfernt wird.

Das Entfernung des Aluminium-Drahtgewebes mit Alkalihydroxid-Lauge erfolgt bevorzugt in einer separaten Einheit, welche Vorkehrungen zur gefahrlosen Ableitung des entstehenden Wasserstoffs aufweist. Nach Zersetzen des Aluminiumträgers wird dann mit weiterer Lauge und gegebenenfalls Wasser gespült, um Reste vor Aluminiumhydroxid zu entfernen. Man erhält so eine Sauerstoffverzehrelektrode, welche in ein Element eingebaut werden kann und zum Beispiel für die Herstellung von Natronlauge eingesetzt werden kann.

Alternativ kann in dem vorgenannten Nassverfahren ein Gewebe aus Glasfasen eingesetzt werden. Nach Beschichtung, Verdichtung und Sintern wird in einer bevorzugten Variante die neue Elektrode in eine Kathodenelement eingebaut, welches für die Elektrolyse von Alkalichlorid-Lösungen eingesetzt wird. Diese Kathode produziert in der Anfangsphase eine mit Silikat und anderen Bestandteilen kontaminierte Lauge, welche separat gehalten und einer Anwendung zugeführt wird, bei welcher die Kontamination nicht stört. Nach dieser Anfangsphase erhält man eine leistungsfähige SVE, mit welcher spezifikationsgerechtes Alkalihydroxid hergestellt werden kann.

Die neue Sauerstoffverzehrelektrode wird bevorzugt als Kathode geschaltet, insbesondere in einer Elektrolysezelle für die Elektrolyse von Alkalichloriden, bevorzugt von Natriumchlorid oder Kaliumchlorid, besonders bevorzugt von Natriumchlorid.

Weiterer Gegenstand der Erfindung ist ein Verfahren zur Elektrolyse, insbesondere zur Chloralkalielektrolyse, unter Verwendung einer hier beschriebenen neuen Sauerstoffverzehrelektrode als Kathode und einer Anode in einem Membranelektrolyseur, dadurch gekennzeichnet, dass vor der Inbetriebnahme der Sauerstoffverzehrelektrode der Trägerwerkstoff wenigstens teilweise entfernt und die Sauerstoffverzehrelektrode als Kathode betrieben wird.

Alternativ kann die Sauerstoffverzehrelektrode bevorzugt als Kathode in einer Brennstoffzelle geschaltet werden.

Ein weiterer Gegenstand der Erfindung ist auch ein Verfahren zur Stromerzeugung unter Verwendung einer hier beschriebenen neuen Sauerstoffverzehrelektrode als Kathode in einer alkalischen Brennstoffzelle, dadurch gekennzeichnet, dass vor der Inbetriebnahme der Sauerstoffverzehrelektrode der Trägerwerkstoff wenigstens teilweise entfernt und die Sauerstoffverzehrelektrode als Kathode betrieben wird.

Weiterer Gegenstand der Erfindung ist daher die Verwendung der neuen Sauerstoffverzehrelektrode zur Reduktion von Sauerstoff im Alkalischen eingesetzt werden, insbesondere in der alkalischen Brennstoffzelle oder als Elektrode in einer Metall/Luft-Batterie, die Verwendung bei der Trinkwasseraufbereitung, beispielsweise zur Herstellung von Natriumhypochlorit oder die Verwendung in der Chlor-Alkalielektrolyse, insbesondere zur Elektrolyse von LiCl, KCl oder NaCl.

Die neue SVE wird besonders bevorzugt bei der Chlor-Alkali-Elekrolyse und hier insbesondere bei der Natriumchlorid-(NaCI)-Elektrolyse eingesetzt.

Gegenstand der Erfindung ist ferner eine Elektrolysevorrichtung, insbesondere für die Chloralkalielektrolyse, aufweisend eine hier beschriebene neue Sauerstoffverzehrelektrode als Sauerstoff verzehrende Kathode.

### Beispiele

### Beispiel

3,5 kg einer Pulvermischung, bestehend aus 7 Gew.-% PTFE-Pulver, 88 Gew.-% Silber 1-Oxid und 5 Gew.-% Silberpulver des Typs 331 der Fa. Ferro, wurden in einem Mischer der Fa. Eirich, Typ R02, ausgerüstet mit einem Sternwirbler als Mischelement, bei einer Drehzahl von 6000 U/min so gemischt, dass die Temperatur der Pulvermischung 55°C nicht übersteigt. Dies wurde dadurch erreicht, dass der Mischvorgang unterbrochen und die Mischung in einem Kühlraum abgekühlt wurde. Insgesamt wurde das Mischen dreimal durchgeführt. Nach dem Mischen wurde die Pulvermischung durch ein Feinsieb mit einer Maschenweite von 1,0 mm gesiebt.

Die gesiebte Pulvermischung wurde anschließend auf ein Netz aus Aluminiumdrähten mit einer Drahtdicke von 0,25 mm und einer Maschenweite von 0,5 mm aufgebracht. Das Aufbringen erfolgte mit Hilfe einer 2 mm dicken Schablone, wobei das Pulver mit einem Sieb mit einer Maschenweite von 0,1 mm aufgebracht wurde. Überschüssiges Pulver, das über die Dicke der Schablone hinausragte, wurde mittels Abstreifer entfernt. Nach Entfernung der Schablone wurde der Träger mit der aufgebrachten Pulvermischung mittels einer Walzenpresse mit einer Presskraft von 0,5 kN/cm verpresst.

Die so erhaltene Gasdiffusionselektrode wurde in ein Bad mit 32%iger Natronlauge überführt. Es entwickelte sich Wasserstoffgas, welches in einem kräftigen Luftstrom abgeführt wurde. Die Elektrode wurde nach 18 h dem Natronlaugebad entnommen, mit destilliertem Wasser abgespült.

Für die Elektrode wurde mittels elektrochemischer Impedanzspektroskopie in einer Halbzelle bei 4 kA/m² und 80°C ein Potential von 0,764 V gegenüber der reversiblen Wasserstoffelektrode (HydroFlex® der Fa. Gaskatel) gemessen. Das Potential wurde um die Spannungsverluste der Messanordnung korrigiert

### Beispiel 2 (Vergleichsbeispiel)

Es wurde eine Gasdiffusionselektrode nach dem im Beispiel 1 beschriebenen Vorgehen hergestellt, bei welcher statt eines Netzes aus Aluminiumdrähten ein Netz aus mit Silber überzogenen Nickeldrähten mit ansonsten gleichen Abmessungen verwendet wurde und entsprechend keine Auflösung der Trägerstruktur erfolgte.

Für die Elektrode wurde mittels elektrochemischer Impedanzspektroskopie in einer Halbzelle bei 4 kA/m² und 80°C ein Potential von 0,752 V gegenüber der reversiblen Wasserstoffelektrode (HydroFlex® der Fa. Gaskatel) gemessen. Das Potential wurde um die Spannungsverluste der Messanordnung korrigiert

Im Vergleich der erfindungsgemäßen Elektrode mit der konventionellen Elektrode zeigt sich ein um 12 mV besseres Potenzial

## Patentansprüche

1. Sauerstoffverzehrelektrode, mindestens aufweisend einen Träger in Form eines Flächengebildes und eine Beschichtung mit einer Gasdiffusionsschicht und einer katalytisch aktiven Komponente, **dadurch gekennzeichnet, dass** der Träger auf einem durch Lösen, Zersetzen, Schmelzen und/oder Verdampfen mindestens teilweise entfernbaren Werkstoff basiert.

2. Sauerstoffverzehrelektrode nach Anspruch 1, **dadurch gekennzeichnet, dass** der Trägerwerkstoff mittels Wasser oder wässriger Lösungen, insbesondere saurer oder basischer Lösungen aus der Elektrode lösbar oder zersetzbar ist.

3. Sauerstoffverzehrelektrode nach Anspruch 2, **dadurch gekennzeichnet, dass** der Trägerwerkstoff mittels saurer wässriger Lösungen eines pH Wertes von höchstens 5, bevorzugt mittels Einwirkung von Mineralsäuren besonders bevorzugt mittels Schwefelsäure aus der Elektrode lösbar oder zersetzbar ist.

4. Sauerstoffverzehrelektrode nach einem der Ansprüche 1 bis 3, **dadurch gekennzeichnet, dass** der Träger auf einem Werkstoff der Reihe: Aluminium oder Zink oder deren Legierungen oder Polyamiden basiert.

5. Sauerstoffverzehrelektrode nach Anspruch 1 oder 2, **dadurch gekennzeichnet, dass** der Trägerwerkstoff mittels basischer wässriger Lösungen eines pH Wertes von mindestens 9, bevorzugt mittels Einwirkung von Alkalilaugen aus der Reihe: Natronlauge, Kalilauge, bevorzugt Natronlauge aus der Elektrode lösbar oder zersetzbar ist.

6. Sauerstoffverzehrelektrode nach Anspruch 1 oder 5, **dadurch gekennzeichnet, dass** der Trägerwerkstoff ausgewählt ist aus der Reihe: Polyester, insbesondere Polyethylenterephthalat, Polybutylenterephthalat und deren Copolymere, Polyvinylidenfluorid; Aluminium, Mineralfasern, insbesondere Fasern aus E-Glas, R-Glas, S-Glas, A-Glas, C-Glas, D-Glas.

7. Sauerstoffverzehrelektrode nach Anspruch 1, **dadurch gekennzeichnet, dass** der Trägerwerkstoff mittels organischer Lösungsmittel aus der Elektrode lösbar oder zersetzbar ist.

8. Sauerstoffverzehrelektrode nach Anspruch 1 oder 7, **dadurch gekennzeichnet, dass** der Trägerwerkstoff ausgewählt ist aus der Reihe: Polyacrylnitril, Polycarbonat und Polystyrol.

9. Sauerstoffverzehrelektrode nach Anspruch 1 oder 2, **dadurch gekennzeichnet, dass** der Trägerwerkstoff auf Polyvinylalkohol oder Polyvinylpyrrolidon basiert.

10. Sauerstoffverzehrelektrode nach einem der Ansprüche 1 bis 9, **dadurch gekennzeichnet, dass** das Flächengebilde des Trägers in Form eines Gewebes, Gewirks, Vlieses, perforierter Folie, Schaum vorliegt, bevorzugt als Gewebe, und insbesondere in mehreren Lagen aufgebaut ist.

11. Sauerstoffverzehrelektrode nach einem der Ansprüche 1 bis 9, **dadurch gekennzeichnet, dass** die Gasdiffusionsschicht auf einem fluorierten Polymer, insbesondere auf Polytetrafluorethylen und gegebenenfalls zusätzlich katalytisch aktivem Material basiert.

12. Sauerstoffverzehrelektrode nach einem der Ansprüche 1 bis 11, **dadurch gekennzeichnet, dass** die katalytisch aktiven Komponente ausgewählt ist aus der Reihe: Silber, Silber I-Oxid, Silber-II-Oxid oder deren Gemische, insbesondere einem Gemisch aus Silber und Silber I-Oxid.

13. Verfahren zur Elektrolyse, insbesondere zur Chloralkalielektrolyse, unter Verwendung einer Sauerstoffverzehrelektrode nach einem der Ansprüche 1 bis 11 als Kathode und einer Anode in einem Membranelektrolyseur, **dadurch gekennzeichnet, dass** vor der Inbetriebnahme der Sauerstoffverzehrelektrode der Trägerwerkstoff wenigstens teilweise entfernt und die Sauerstoffverzehrelektrode als Kathode betrieben wird.

14. Verfahren zur Stromerzeugung unter Verwendung einer Sauerstoffverzehrelektrode nach einem der Ansprüche 1 bis 11 als Anode und einer Kathode in einer alkalischen Brennstoffzelle, **dadurch gekennzeichnet, dass** vor der Inbetriebnahme der Sauerstoffverzehrelektrode der Trägerwerkstoff wenigstens teilweise entfernt und die Sauerstoffverzehrelektrode als Kathode betrieben wird.

15. Verwendung der Sauerstoffverzehrelektrode nach einem der Ansprüche 1 bis 11 als Sauerstoff verzehrende Kathode in der Elektrolyse, insbesondere in der Chloralkalielektrolyse, oder als Elektrode in einer alkalischen Brennstoffzelle oder als Elektrode in einer Metall/Luft-Batterie.

16. Elektrolysevorrichtung, insbesondere für die Chloralkalielektrolyse, aufweisend eine Sauerstoffverzehrelektrode nach einem der Ansprüche 1 bis 11 als Sauerstoff verzehrende Kathode.
